# EUROPÄISCHE PATENTSCHRIFT

(11) **EP 1 665 173 B1**
(45) Veröffentlichungstag und Bekanntmachung des Hinweises auf die Patenterteilung: **03.11.2010**
(21) Anmeldenummer: 05772052.6
(22) Anmeldetag: 04.08.2005
(51) Int. Cl.: G07C 5/08

(54) **VERFAHREN ZUR MANIPULATIONSERKENNUNG AN EINEM SENSOR**
METHOD FOR DETECTING MANIPULATIONS ON A SENSOR
PROCEDE POUR DETECTER DES MANIPULATIONS SUR UN CAPTEUR

(30) Priorität: 06.09.2004 DE 102004043052
(43) Veröffentlichungstag der Anmeldung: 07.06.2006
(73) Patentinhaber: Continental Automotive GmbH, 30165 Hannover (DE)
(72) Erfinder: NAETHER, Horst, 78052 Villingen-Schwenningen (DE)
(86) Internationale Anmeldenummer: PCT/EP2005/053820
(87) Internationale Veröffentlichungsnummer: WO 2006/027297

(56) Entgegenhaltungen:
- US-A- 6 109 520
- US-A- 6 144 927
- US-A1- 2003 194 088

## Beschreibung

Die Erfindung betrifft ein Verfahren zur Erkennung von Manipulationen an einer Anordnung bestehend aus einem impulsgebenden Sensor und einer Aufzeichnungseinheit.

Aus US 6,144,927 A ist eine aus einem Impulsgeber und einem ein Aufzeichnungsgerät bildenden Kontrollgerät bestehende, als Datenübertragungsvorrichtung ausgebildete Anordnung bekannt. Manipulationen an der Anordnung können durch ein Verfahren erkannt werden, bei welchem ein von dem Impulsgeber gebildeter Sensor an die Aufzeichnungseinheit ein Impulssignal einer Messung übermittelt, die Aufzeichnungseinheit an den Sensor einen Anforderungsbefehl sendet, woraufhin der Sensor an die Aufzeichnungseinheit ein Datensignal übermittelt, welches Daten über einen Zählerstand von in einer Kodierschaltung des Sensors aufsummierten Impulsen enthält, eine Signalschnittstelle der Aufzeichnungseinheit das Impulssignal zu einer Logikeinheit der Aufzeichnungseinheit weiterleitet, welche Logikeinheit die empfangenen Impulse zeitbezogen zählt, und in einem Vergleicher der Logikeinheit der übermittelte Zählerstand mit Bezug auf einen definierten Zeitraum mit demjenigen Zählerstand verglichen wird, der sich durch die zeitbezogene Zählung der empfangenen Impulse ergeben hat.

Insbesondere im Bereich der Betriebsdatenaufzeichnung eines Nutzfahrzeuges mittels eines Tachographen sind Manipulationen auf Grund des Urkundencharakters der Aufzeichnungen unbedingt zu vermeiden. Neben der Relevanz dieser Aufzeichnungen als Nachweis in rechtlichen Auseinandersetzungen sind hier auch die Sicherheit das Fahrzeugbetriebes und arbeitsrechtliche Gesichtspunkte wichtig. Mit der neuen Generation von Tachographen in digitaler Ausführung gemäß der EU-Verordnung EU-VO 3821/85 sieht sich die Entwicklung dieser Geräte vor die Herausforderung gestellt, Manipulationen dieser neuen Technologie zuverlässig zu verhindern. Eine nahe liegende Methode, die Aufzeichnungen in betrügerischer Absicht zu manipulieren, liegt in der Möglichkeit, das Signal von einem Sensor, der meist im Getriebebereich des Kraftfahrzeuges angebracht ist, beispielsweise elektromagnetisch zu modifizieren. So könnten die regelmäßig impulsförmigen Signale des Sensors, wenn sie in Echtzeit übermittelt werden, eine Verzögerung erfahren und auf diese Weise stets eine langsamere als die gefahrene Geschwindigkeit zur Aufzeichnung bringen.

Die Erfindung hat es sich daher zur Aufgabe gemacht, Manipulationen an der Übertragung eines zu der Wegstrecke bzw. der Geschwindigkeit korrelierten Signals von einem impulsgebenden Sensor zu einer Aufzeichnungseinheit zu erschweren.

Zur Lösung der Aufgabe schlägt die Erfindung ein Verfahren gemäß dem Anspruch 1 vor. Die Unteransprüche enthalten vorteilhafte Weiterbildungen des erfindungsgemäßen Verfahrens.

Das erfindungsgemäße Verfahren findet besonders vorteilhafte Anwendung bei der personenbezogenen Aufzeichnung von Daten betreffend den Betrieb eines Kraftfahrzeuges, wenn die Aufzeichnungseinheit als Tachograph ausgebildet ist und der impulsgebende Sensor ein zu der zurückgelegten Wegstrecke des Fahrzeugs eindeutig korreliertes Signal an die Aufzeichnungseinheit bzw. den Tachographen übermittelt, da im Rahmen dieser Anwendung besonders strenge Maßstäbe an die Manipulationssicherheit anzulegen sind. Der impulsgebende Sensor ist hierbei vorteilhaft als Hall-Sonde ausgebildet und wirkt mit einem rotierenden Getriebebauteil zusammen, das alternierend Vorsprünge und Freisparungen aufweist und auf diese Weise messbar die Permeabilität in der Umgebung der Hall-Sonde ein impulsförmiges Signal, vorzugsweise ein annähernd rechteckiges Signal gebend verändert. Dementsprechend übermittelt der Sensor an die Aufzeichnungseinheit Echtzeitimpulse, deren Periodendauer eindeutig zu der Drehfrequenz des entsprechenden Getriebebauteils und eindeutig zu der Fahrzeuggeschwindigkeit bzw. der Wegstrecke korreliert ist. Eine hervorragende Manipulationssicherheit erreicht das erfindungsgemäße Verfahren dadurch, dass die Messergebnisse der Sensormessung an die Aufzeichnungseinheit sowohl als Echtzeitimpulse übermittelt werden als auch als Datensignale. Hierzu weist der Sensor eine entsprechende Auswerteeinheit auf, die die Echtzeitimpulse in Datensignale höheren Informationsgehaltes übersetzt, welche anschließend an die Aufzeichnungseinheit parallel zu den Echtzeitimpulsen übermittelt werden. Eine derartige Übermittlung wird erfindungsgemäß von der Aufzeichnungseinheit, insbesondere von einem Datenauswertungsmodul der Aufzeichnungseinheit mittels eines ersten Anforderungsbefehls initiiert, auf welchen der Sensor mit dem Datensignal antwortet. Auf Grund des zyklischen Aussendens des ersten Anforderungsbefehls an den Sensor kann das Datensignalauswertungsmodul der Aufzeichnungseinheit die Messung des Sensors lückenlos mittels der Datensignale nachvollziehen. Die parallel zu dem Datensignal von dem Sensor an die Aufzeichnungseinheit übermittelten Echtzeitimpulse werden von der Aufzeichnungseinheit mittels einer Echtzeitsignalschnittstelle aufgenommen und von dieser der Anzahl nach zu einer Echtzeitimpulsanzahl aufsummiert. Das Datensignalauswertungsmodul fordert mittels eines zweiten Anforderungsbefehls von der Echtzeitsignalschnittstelle in zyklischen Abständen die Echtzeitimpulsanzahl an und vergleicht den Unterschied der Echtzeitimpulsanzahl der aktuellen Anforderung zu derjenigen der vorhergehenden Anforderung mit der Anzahl der Impulse, die die Datensignalauswertung aus den zyklisch übermittelten Datensignalen für den gleichen Zeitraum ermittelt hat.

Damit das Datensignalauswertungsmodul stets die zu der richtigen Zeitspanne der Messung gehörenden Echtzeitimpulsanzahlen mit entsprechenden Datensignalimpulsanzahlen vergleicht und hierbei keine Fehlzuordnung erfolgt, wird der erste Anforderungsbefehl und der zweite Anforderungsbefehl um eine bestimmte Zeitspanne Δt zueinander versetzt versendet. Diese Zeitspanne Δt ist abgestimmt auf den Zyklus der ersten Anforderungsbefehle und der zeitlichen Differenz der Signalübertragung zwischen dem Echtzeitsignal bzw. den Echtzeitimpulsen und dem Datensignal.

Das erfindungsgemäße Verfahren entfaltet besondere Vorteile, wenn die zyklische Übertragung des Datensignals von dem Sensor an die Aufzeichnungseinheit in regelmäßigen zeitlichen Abständen erfolgt, insbesondere in einminütigen Abständen. Etwa einminütige Abstände haben sich als besonders vorteilhaft erwiesen, weil insbesondere bei einer Anwendung des erfindungsgemäßen Verfahrens für die Aufzeichnungsfunktion eines Tachographen bei einer in Schichten modular ausgebildeten Gestaltung einer Software, in der das Verfahren implementiert ist, die Softwaremodule zwischen den Schnittstellen und der Auswertung hinsichtlich der Bearbeitung und Übermittlung der Echtzeitsignale und der Datensignale während dieser Zeit einen Zyklus sicher abschließen können.

Große Vorteile bei der Implementierung und bei Änderungen erbringt ein schichtenmäßiger Aufbau des erfindungsgemäßen Verfahrens und eine entsprechende Implementierung in der Weise, dass eine Datensignalauswertung in einer Schicht angeordnet ist, die Rohdaten liefert, empfängt und verarbeitet, eine mit der ersten Schicht kommunizierende zweite Schicht sich um den Transfer von Daten kümmert in der Weise, dass Daten konform entsprechender Datenübertragungsprotokolle transformiert werden oder zusätzlich noch eine Verschlüsselung erfahren. Eine mit der zweiten Schicht kommunizierende dritte Schicht umfassend beispielsweise eine serielle Datenschnittstelle und eine Echtzeitsignalschnittstelle spricht hierbei zweckmäßig Prozessorregister an und generiert zur Verarbeitung von Datenströmen Prozessor-Interrupts. Bestandteil der zweiten Schicht ist zweckmäßig ein Transfermodul, welches die Datensignale von dem Datensignalauswertungsmodul in eine auf das Datenübertragungsprotokoll abgestimmte Form transformiert und dementsprechend protokollkonforme empfangene Datensignale von dem Sensor an die Aufzeichnungseinheit zur internen Weiterverarbeitung in der Aufzeichnungseinheit zurück transformiert.

Zur Verhinderung jeglicher Manipulation ist es sinnvoll, wenn die Aufzeichnungseinheit an den Sensor und der Sensor an die Aufzeichnungseinheit die Datensignale verschlüsselt versendet und Bestandteil der Aufzeichnungseinheit ein Transfermodul ist, welches Datensignale von der Aufzeichnungseinheit an den Sensor sowie von dem Sensor an die Aufzeichnungseinheit verschlüsselt bzw. entschlüsselt. Davon im Wesentlichen unabhängig können zweckmäßig ohne Verschlüsselung und nicht konform zu einem Datenübertragungsprotokoll Echtzeitimpulse von dem Sensor an ein Echtzeitsignalauswertungsmodul übermittelt werden.

Vorteilhaft steht das Echtzeitsignalauswertungsmodul, welches die von der Echtzeitsignalstelle übermittelten Echtzeitimpulse insbesondere in eine Information über eine Geschwindigkeit bei der Anwendung des Verfahrens für einen Tachographen überführt, in einer signalübertragenden Verbindung mit dem Datensignalauswertungsmodul, an welches die Ergebnisse dieser Auswertung als ein zweites Datensignal übersendet werden. Eine derartige Übersendung bzw. Kommunikation zwischen dem Echtzeitsignalauswertungsmodul und dem Datensignalauswertungsmodul erfolgt zweckmäßig mittels eines zwischen den beiden Modulen angeordneten Kommunikationsspeichers asynchron.

Die Zeitspanne zwischen dem ersten Anforderungsbefehl und dem zweiten Anforderungsbefehl hat sich in der Praxis mit einer Länge zwischen 50 ms und 300 ms als sinnvoll erwiesen. Beste Stabilität des erfindungsgemäßen Verfahrens und minimale Fehleranfälligkeit lassen sich erzielen mit einer Zeitspanne zwischen 147 ms und 172 ms, so dass die Datensignalauswertung die Echtzeitimpulsanzahl stets zu einer korrekten Datensignalimpulsanzahl zuordnet und auf die richtigen Vergleichsergebnisse kommt .

In der Folge ist die Erfindung anhand eines speziellen Ausführungsbeispiels unter Bezugnahme auf eine Zeichnung zur Verdeutlichung näher erläutert. Es zeigt:

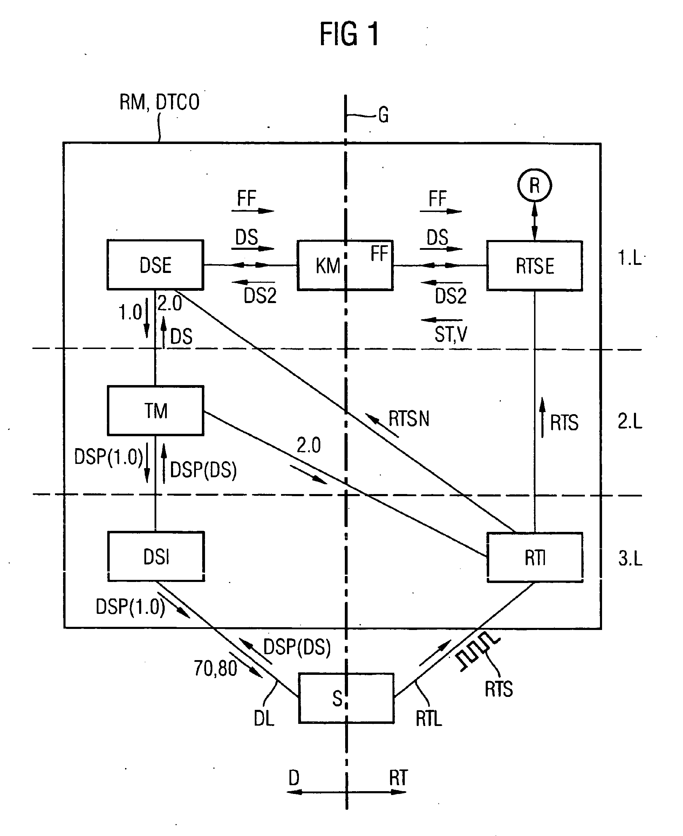

- Figur 1: eine schematische Darstellung des erfindungsgemäßen Verfahrens.

Figur 1 zeigt eine Anordnung bestehend aus einem Tachographen DTCO und einem Sensor S. Der Tachograph DTCO steht mit dem Sensor S mittels einer Echtzeitsignalleitung RTL und einer Datenleitung DL in Verbindung. Wesentliche Komponenten des Tachographen DTCO sind eine serielle Datensignalschnittstelle DSI, ein Transfermodul TM, ein Datensignalauswertungsmodul DSE, ein Kommunikationsspeicher KM, ein Echtzeitsignalauswertungsmodul RTSE und eine Echtzeitsignalschnittstelle RTI. Der Tachograph DTCO übernimmt hierbei die Funktion einer erfindungsgemäßen Aufzeichnungseinheit RM.

Zu Beginn eines Signalübertragungsvorganges sendet der Tachograph DTCO initiiert von der Datensignalauswertung DSE an den Sensor S Authentifizierungsdaten 70 und darauf folgend eine Antwortanforderung 80. Nach erfolgreicher Authentifizierung beider Seiten und Austausch eines Sitzungsschlüssels treten der Tachograph DTCO und der Sensor S in eine Übermittlung von auf den Betrieb des Nutzfahrzeuges bezogener Daten gemäß ISO 16844-3 ein. Jede Minute initiiert das Datensignalauswertungsmodul DSE mittels eines ersten Anforderungsbefehls 1.0 eine Übertragung der Messergebnisse des Sensors der Zwischenzeit als Datensignal DS an das Datensignalauswertungsmodul DSE. Hierbei arbeitet das erfindungsgemäße Verfahren gemäß einer schichtenweisen Implementierung in der Art, dass das Datensignalauswertungsmodul DSE die erste Anforderung 1.0 und das Datensignal DS in Form von Rohdaten aussendet bzw. empfängt, da das Echtzeitsignalauswertungsmodul RTSE, der Kommunikationsspeicher KM und die Datensignalauswertung DSE einer ersten Schicht 1.L angehören.

Der erste Anforderungsbefehl 1.0 gelangt als Rohdatum von den Datensignalsauswertungsmodul DSE zu dem Transfermodul TM, welches der zweiten Schicht 2.L angehört. Als Element der zweiten Schicht 2.L transformiert das Transfermodul TM den ersten Anforderungsbefehl 1.0 in eine Form, entsprechend einem Datenübertragungsprotokoll DSP.

Die protokollkonformen Datensignale werden von dem Transfermodul TM außerdem verschlüsselt und an ein Element einer dritten Schicht 3.L der Implementierung des erfindungsgemäßen Verfahrens, nämlich an die Datensignalschnittstelle DSI übergeben. Die dritte Schicht 3.L spricht auf unterster Ebene Prozessorregister an und generiert Interrupts insbesondere für den Datenaustausch mit dem Sensor S. Der erste Anforderungsbefehl gelangt auf diese Weise über die Datensignalschnittstelle DSI mittels der Datenleitung DL zu dem Sensor S. Einen entsprechend umgekehrten Weg mit im Wesentlichen inversen Vorgängen nimmt das Datensignal DS ausgehend von dem Sensor zu dem Datensignalauswertungsmonui DSE.

Im Wesentlichen unabhängig von den mit dem Datensignal DS in Verbindung stehenden Vorgängen D, die in der schematischen Darstellung auf einer mit D bezeichneten Seite D einer Grenzlinie G sich befinden, finden jenseitig dieser Grenzlinie G gleichzeitig mit Echtzeitimpulsen RTS in Verbindung stehende Vorgänge auf der mit RT bezeichneten Seite RT statt. Mittels der Echtzeitsignalleitung RTL sendet der Sensor S Echtzeitimpulse RTS an die Echtzeitsignalschnittstelle RTI.

Die in der dritten Schicht 3.L befindliche Echtzeitsignalschnittstelle RTI sendet entsprechende Signale RTS an das Echtzeitsignalauswertungsmodul RTSE, wobei die Anzahl der Echtzeitsignale RTS zu der Echtzeitimpulsanzahl RTSN fortlaufend aufaddiert werden.

Um eine bestimmte Zeitspanne Δt zu dem ersten Anforderungsbefehl 1.0 versetzt, nämlich um etwa 147 ms bis 172 ms, abgestimmt auf die in der zweiten Schicht 2.L und dritten Schicht 3.L ablaufenden Prozesse der Übertragung des Datensignals DS bzw. des ersten Anforderungsbefehls 1.0, sendet das Datensignalauswertungsmodul DSE an die Echtzeitsignalschnittstelle RTI einen zweiten Anforderungsbefehl 2.0 unter Zwischenschaltung des Transfermoduls TM. Entsprechend zeitversetzt zu dem Eintreffen des Datensignals DS aus dem Sensor S bei dem Datensignalauswertungsmodul DSE übermittelt die Echtzeitsignalschnittstelle RTI eine Echtzeitimpulsanzahl RTSN direkt an das Datensignalauswertungsmodul DSE.

Mittels des Kommunikationsspeichers KM befinden sich das Datensignalauswertungsmodul DSE und das Echtzeitsignalauswertungsmodul RTSE im asynchronen Datenaustausch. Das Datensignalauswertungsmodul DSE vergleicht die Echtzeitimpulsanzahl RTSN mit der Datensignalimpulsanzahl DSN und setzt bei einer bestimmt Abweichung dieser beiden Werte bestimmter, nicht mehr zu tolerierender Größe, in dem Kommunikationsspeicher KM ein Fehler-Flag FF, welches das Echtzeitsignalauswertungsmodul RTSE dort ausliest. Das Fehler-Flag FF dient hierbei als Indikator für eine Manipulation und gelangt in einen Aufzeichnungsspeicher R. Gleichzeitig übernimmt das Echtzeitsignalauswertungsmodul RTSE anstelle der Echtzeitimpulse RTS die Informationen aus dem Datensignal DS zur Ermittlung der zurückgelegten Wegstrecke des Nutzfahrzeuges.

Beim Vergleich der Echtzeitimpulsanzahl RTSN und der Datensignalimpulsanzahl DSN ist eine als Grenze definierte Abweichung zulässig, erst bei Überschreitung der Abweichung wird das Fehler-Flag FF gesetzt.

Abhängig von den Echtzeitimpulsen RTS übermittelt das Echtzeitsignalauswertungsmodul RTSE ein Fahrsignal V oder ein Haltesignal ST an das Datensignalauswertungsmodul DSE.

Wird von dem Echtzeitsignalauswertungsmodul RTSE das Haltesignal ST an das Datensignalauswertungsmodul DSE übermittelt, vermeldet das Datensignalauswertungsmodul DSE den Stillstand des Fahrzeuges.

Übermittelt das Echtzeitauswertungsmodul RTSE an das Datensignalauswertemodul DSE kein Signal V für den Fall, dass das Echtzeitsignalauswertungsmodul RTSE den Zustand "Halt" erkennt, und liefert die Echtzeitsignalschnittstelle RTI eine zu niedrige Echtzeitimpulsanzahl RTSN = 0 im Vergleich zur Datensignalimpulsanzahl DSN, wird das Fehler- Flag FF gesetzt und der Aufzeichnung wird die aus dem Datensignal ermittelte Wegstrecke zugrunde gelegt und es wird der Zustand festgestellt, dass die Verbindung mittels der Echtzeitsignalleitung RTL gestört ist.

Übermittelt das Echtzeitsignalauswertungsmodul RTSE an das Datensignalauswertungsmodul DSE ein Signal V für den Fall, dass das Echtzeitsignalauswertungsmodul RTSE den Zustand "Fahren" erkennt, und liefert die Echtzeitsignalschnittstelle RTI eine zu niedrige Echtzeitimpulsanzahl RTSN im Vergleich zur Datensignalimpulsanzahl DSN, wird das Fehler-Flag FF gesetzt und der Aufzeichnung wird die aus dem Datensignal DS ermittelte Wegstrecke bzw. Fahrgeschwindigkeit zugrunde gelegt.

Bleibt das Datensignal DS im Rahmen der zyklischen Anforderungsbefehle 1.0 völlig aus, wird ebenfalls das Fehler- Flag FF gesetzt und der Zustand festgestellt, dass die Verbindung mittels der Datenleitung DL gestört ist.

## Patentansprüche

1. Verfahren zur Erkennung von Manipulationen an einer Anordnung bestehend aus einem impulsgebenden Sensor (S) und einer Aufzeichnungseinheit (RM), wobei
- der Sensor (S) an die Aufzeichnungseinheit (RM) Echtzeitimpulse (RTS) einer Messung übermittelt,
- die Aufzeichnungseinheit (RM) zyklisch an den Sensor (S) einen ersten Anforderungsbefehl (1.0) sendet, woraufhin der Sensor (S) an die Aufzeichnungseinheit (RM) ein erstes Datensignal (DS) übermittelt, welches Information über zwischenzeitliche Echtzeitimpulse (RTS) enthält,
- eine Echtzeitsignalschnittstelle (RTI) die Echtzeitimpulse (RTS) zu einer Echtzeitimpulsanzahl (RTSN) aufsummiert,
- ein Datensignalauswertungsmodul (DSE) der Aufzeichnungseinheit (RM) die Anzahl der Impulse basierend auf dem Datensignal (DS) zu einer Datensignalimpulsanzahl (DSN) ermittelt,
- das Datensignalauswertungsmodul (DSE) an die Echtzeitsignalschnittstelle (RTI) einen zweiten Anforderungsbefehl (2.0) sendet, woraufhin die Echtzeitsignalschnittstelle (RTI) an das Datensignalauswertungsmodul (DSE) die Echtzeitimpulsanzahl (RTSN) übermittelt,
- wobei der erste Anforderungsbefehl (1.0) und der zweite Anforderungsbefehl (2.0) um eine bestimmte Zeitspanne (Δt) zueinander versetzt aufeinander folgen und
- das Datensignalauswertungsmodul (DSE) die Echtzeitimpulsanzahl (RTSN) und die Datensignalimpulsanzahl (DSN) miteinander vergleicht.

2. Verfahren nach Anspruch 1, **dadurch gekennzeichnet, dass** die zyklische Übertragung des Datensignals (DS) von dem Sensor (S) an die Aufzeichnungseinheit in regelmäßigen zeitlichen Abständen erfolgt.

3. Verfahren nach mindestens einem der vorhergehenden Ansprüche, **dadurch gekennzeichnet, dass** der Sensor (S) mit der Aufzeichnungseinheit (RM) auf der Grundlage eines Datenübertragungsprotokolls (DSP) Datensignale (DS) austauscht.

4. Verfahren nach Anspruch 3, **dadurch gekennzeichnet, dass** zwischen dem Datensignalauswertungsmodul (DSE) und dem Sensor (S) ein Transfermodul (TM) angeordnet ist, welches die Datensignale (DS) von dem Datensignalauswertungsmodul (DSE) in eine auf das Datenübertragungsprotokoll (DSP) abgestimmte Form transformiert und protokollkonforme empfangene Datensignale (DS) von dem Sensor (S) an die Aufzeichnungseinheit (RM) zur internen Weiterverarbeitung in der Aufzeichnungseinheit (RM) zurück transformiert.

5. Verfahren nach mindestens einem der vorhergehenden Ansprüche, **dadurch gekennzeichnet, dass** die Aufzeichnungseinheit (RM) an den Sensor (S) und der Sensor (S) an die Aufzeichnungseinheit (RM) die Datensignale (DS) verschlüsselt versendet, Bestandteil der Aufzeichnungseinheit (RM) ein Transfermodul (TM) ist, welches Datensignale (DS) von der Aufzeichnungseinheit (RM) an den Sensor (S) und von dem Sensor (S) an die Aufzeichnungseinheit (RM) verschlüsselt bzw. entschlüsselt.

6. Verfahren nach mindestens einem der vorhergehenden Ansprüche, **dadurch gekennzeichnet, dass** die Aufzeichnungseinheit (RM) eine Echtzeitsignalschnittstelle (RTI), die Echtzeitsignale (RTS) von dem Sensor (S) empfängt, und eine Datensignalschnittstelle (DSI), die Datensignale (DS) mit dem Sensor (S) austauscht, aufweist.

7. Verfahren nach Anspruch 6, **dadurch gekennzeichnet, dass** die Echtzeitsignalschnittstelle (RTI) mit einem Echtzeitsignalauswertungsmodul (RTSE) in signalübertragender Verbindung steht, das Echtzeitsignalauswertungsmodul (RTSE) die Echtzeitsignale (RTS) auswertet und aus den Ergebnissen dieser Auswertung ein zweites Datensignal (DS2) an das Datensignalauswertungsmodul (DSE) erzeugt.

8. Verfahren nach Anspruch 7, **dadurch gekennzeichnet, dass** das Echtzeitsignalauswertungsmodul (RTSE) mit dem Datensignalauswertungsmodul (DSE) mittels eines Kommunikationsspeichers (KM) asynchron Daten austauscht.

9. Verfahren nach mindestens einem der vorhergehenden Ansprüche, **dadurch gekennzeichnet, dass** die Zeitspanne (Δt) zwischen 50 ms und 300 ms beträgt.

10. Verfahren nach mindestens einem der vorhergehenden Ansprüche, **dadurch gekennzeichnet, dass** die Aufzeichnungseinheit (RM) jede Minute an den Sensor (S) einen ersten Anforderungsbefehl (1.0) sendet.

11. Verfahren nach mindestens einem der vorhergehenden Ansprüche, **dadurch gekennzeichnet, dass** die Aufzeichnungseinheit (RM) bei Ausbleiben eines Datensignals (DS)als Antwort auf den zyklisch ausgesendeten ersten Anforderungsbefehl (1.0) ein Fehler-Flag (FF) in den Kommunikationsspeicher einträgt.

12. Verfahren nach mindestens einem der vorhergehenden Ansprüche, **dadurch gekennzeichnet, dass** die Aufzeichnungseinheit (RM) bei einem eine bestimmte Grenze überschreitenden Unterschied in der Anzahl an Echtzeitimpulsen (RTS) im zeitbezogenen Vergleich mit dem Datensignal (DS) ein Fehler-Flag (FF) in den Kommunikationsspeicher einträgt und den Aufzeichnungen der Wegstrecke das Datensignal (DS) zugrunde gelegt wird.

13. Verfahren nach mindestens einem der vorhergehenden Ansprüche, **dadurch gekennzeichnet, dass** ein Fehler-Flag (FF) gesetzt wird und/oder der Aufzeichnung die aus dem Datensignal (DS) ermittelte Wegstrecke zugrunde gelegt wird und/oder der Zustand aufgezeichnet wird, dass die Verbindung mittels der Echtzeitsignalleitung (RTL) gestört ist, wenn das Echtzeitauswertungsmodul (RTSE) an das Datensignalauswertemodul (DSE) kein Signal (V) überträgt und.das Echtzeitsignalauswertungsmodul (RTSE) den Zustand "Halt" erkennt und die Echtzeitsignalschnittstelle (RTI) eine zu niedrige Echtzeitimpulsanzahl (RTSN) im Vergleich zur Datensignalimpulsanzahl (DSN) liefert.

14. Verfahren nach mindestens einem der vorhergehenden Ansprüche, **dadurch gekennzeichnet, dass** ein Fehler-Flag (FF) gesetzt wird und der Aufzeichnung die aus dem Datensignal (DS) ermittelte Wegstrecke bzw. Fahrgeschwindigkeit zugrunde gelegt wird, wenn das Echtzeitsignalauswertungsmodul (RTSE) an das Datensignalauswertungsmodul (DSE) ein Signal (V) übermittelt und das Echtzeitsignalauswertungsmodul (RTSE) den Zustand "Fahren" erkennt und die Echtzeitsignalschnittstelle (RTI) eine zu niedrige Echtzeitimpulsanzahl (RTSN) liefert im Vergleich zur Datensignalimpulsanzahl (DSN).

15. Verfahren nach mindestens einem der vorhergehenden Ansprüche, **dadurch gekennzeichnet, dass** das Fehler-Flag (FF) gesetzt wird, wenn das Datensignal (DS) im Rahmen der zyklischen Anforderungsbefehle (1.0) ausbleibt und der Zustand aufgezeichnet wird, dass die Verbindung mittels der Datenleitung (DL) gestört ist.

## Claims

1. Method for identification of manipulation to an arrangement comprising a sensor (S) which emits pulses and a recording unit (RM), in which
- the sensor (S) transmits real-time pulses (RTS) from a measurement to the recording unit (RM),
- the recording unit (RM) cyclically transmits a first request instruction (1.0) to the sensor (S),
in response to which the sensor (S) transmits a first data signal (DS), which contains information about intermediate real-time pulses (RTS) to the recording unit (RM),
- a real-time signal interface (RTI) which adds the real time pulses (RTS) to form a number of real time pulses (RTSN),
- a data signal evaluation module (DSE) in the recording unit (RM) determines the number of pulses based on the data signal (DS) to form a number of data signal pulses(DSN)
- the data signal evaluation module (DSE) transmits a second request instruction (2.0) to the real time signal interface (RTI), in response to which the real time signal interface (RTI) transmits the number of real time pulses (RTSN) to the data signal evaluation module (DSE),
- in which the first request instruction (1.0) and the second request instruction (2.0) follow one another offset by a specific time interval (Δt),
and
- the data signal evaluation module (DSE) compares the number of real time pulses (RTSN) and the number of data signal pulses(DSN) with one another.

2. Method according to Claim 1, **characterized in that** the data signal (DS) is transmitted cyclically from the sensor (S) to the recording unit at regular time intervals.

3. Method according to at least one of the preceding claims, **characterized in that** the sensor (S) interchanges data signals (DS) with the recording unit (RM) on the basis of a data transmission protocol (DSP).

4. Method according to Claim 3, **characterized in that** a transfer module (TM) is arranged between the data signal evaluation module (DSE) and the sensor (S), transforms the data signals (DS) from the data signal evaluation module (DSE) to a form that is matched to the data transmission protocol (DSP) and transforms received data signals (DS), which conform with the protocol, from the sensor (S) to the recording unit (RM) back for internal further processing in the recording unit (RM).

5. Method according to at least one of the preceding claims, **characterized in that** the recording unit (RM) transmits the data signals (DS) to the sensor (S) in scrambled form, and the sensor (S) transmits the data signals (DS) to the recording unit (RM) in scrambled form, and one component of the recording unit (RM) is a transfer module (TM) which scrambles and descrambles data signals (DS) from the recording unit (RM) to the sensor (S), and from the sensor (S) to the recording-unit (RM), respectively.

6. Method according to at least one of the preceding claims, **characterized in that** the recording unit (RM) has a real time signal interface (RTI) which receives real time signals (RTS) from the sensor (S), and has a data signal interface (DSI) which interchanges data signals (DS) with the sensor (S).

7. Method according to Claim 6, **characterized in that** the real time signal interface (RTI) is connected for signal transmission purposes to a real time signal evaluation module (RTSE), the real time signal evaluation module (RTSE) evaluates the real time signals (RTS), and produces a second data signal (DS2) to the data signal evaluation module (DSE) from the results of this evaluation.

8. Method according to Claim 7, **characterized in that** the real time signal evaluation module (RTSE) interchanges data asynchronously with the data signal evaluation module (DSE) by means of a communication memory (KM).

9. Method according to at least one of the preceding claims, **characterized in that** the time interval (Δt) is between 50 ms and 300 ms.

10. Method according to at least one of the preceding claims, **characterized in that** the recording unit (RM) transmits a first request instruction (1.0) to the sensor (S) every minute.

11. Method according to at least one of the preceding claims, **characterized in that** the recording unit (RM) enters a fault flag (FF) in the communication memory as a response to the cyclically transmitted first request instruction (1.0) in the absence of a data signal (DS).

12. Method according to at least one of the preceding claims, **characterized in that** the recording unit (RM) enters a fault flag (FF) in the communication memory if there is any difference greater than a specific limit in the number of real time pulses (RTS) in the time-related comparison with the data signal (DS), and the data signal (DS) is used as the basis for recording of the distance traveled.

13. Method according to one of the preceding claims, **characterized in that** a fault flag (FF) is set and/or the distance traveled, which is determined from the data signal (DS), is used as the basis for recording, and/or the state is recorded **in that** the connection by means of the real time signal line (RTL) is faulty when the real time evaluation module (RTSE) does not transmit any signal (V) to the data signal evaluation module (DSE) and the real time signal evaluation module (RTSE) identifies the "stop" state, and the real time signal interface (RTI) produces an excessively low number of real time pulses (RTSN) in comparison to the number of data signal pulses(DSN).

14. Method according to at least one of the preceding claims, **characterized in that** a fault flag (FF) is set and the distance traveled or the speed of travel as determined from the data signal (DS) is used as the basis for recording, when the real time signal evaluation module (RTSE) transmits a signal (V) to the data signal evaluation module (DSE) and the real time signal evaluation module (RTSE) identifies the "drive" state and the real time signal interface (RTI) produces an excessively low number of real time pulses (RTSN) in comparison to the number of data signal pulses(DSN).

15. Method according to at least one of the preceding claims, **characterized in that** the fault flag (FF) is set when the data signal (DS) is absent for the purposes of the cyclic request instructions (1.0) and the state is recorded that the connection by means of the data line (DL) is faulty.

## Revendications

1. Procédé permettant de détecter des manipulations frauduleuses effectuées sur un système comprenant un détecteur (S) qui émet des impulsions et une unité d'enregistrement (RM), procédé au cours duquel
- le détecteur (S) transmet à l'unité d'enregistrement (RM) des impulsions en temps réel (RTS) provenant d'une mesure,
- l'unité d'enregistrement (RM) envoie d'une façon cyclique une première instruction de sollicitation (1.0) au détecteur (S), à la suite de quoi le détecteur (S) transmet à l'unité d'enregistrement (RM) un premier signal de données (DS) qui contient une information relative aux impulsions en temps réel (RTS) intervenues entre-temps,
- une interface (RTI) pour signaux en temps réel additionne les impulsions en temps réel ((RTS) et délivre un nombre d'impulsions en temps réel (RTSN),
- un module d'évaluation des signaux de données (DSE) de l'unité d'enregistrement (RM) détermine le nombre d'impulsions sur la base du signal de données (DS) et délivre un nombre d'impulsions du signal de données (DSN),
- le module d'évaluation des signaux de données (DSE) envoie à l'interface (RTI) pour signaux en temps réel une deuxième instruction de sollicitation (2.0), à la suite de quoi l'interface (RTI) pour signaux en temps réel transmet le nombre d'impulsions en temps réel (RTSN) au module d'évaluation du signal de données (DSE),
- la première instruction de sollicitation (1.0) et la deuxième instruction de sollicitation (2.0) se suivant avec un certain décalage dans le temps (Δt) et
- le module d'évaluation du signal de données (DSE) comparant l'un à l'autre le nombre d'impulsions en temps réel (RTSN) et le nombre d'impulsions du signal de données (DSN).

2. Procédé selon la revendication 1, **caractérisé par le fait que** la transmission cyclique des signaux de données (DS) entre le détecteur (S) et l'unité d'enregistrement a lieu à des intervalles de temps réguliers.

3. Procédé selon au moins l'une des revendications précédentes, **caractérisé par le fait que** le détecteur (S) échange des signaux de données (DS) avec l'unité d'enregistrement (RM) sur la base d'un protocole de transmission de données (DSP).

4. Procédé selon la revendication 3, **caractérisé par le fait qu**'un module de transfert (TM) est placé entre le module d'évaluation des signaux de données (DSE) et le détecteur (S), lequel module de transfert convertit les signaux de données (DS) provenant du module d'évaluation des signaux de données (DSE) en une forme adaptée au protocole de transmission de données (DSP) et reconvertit des signaux de données (DS) conformes au protocole qui sont reçus en provenance du détecteur (S) et envoyés à l'unité d'enregistrement (RM) en vue de leur traitement interne dans l'unité d'enregistrement (RM).

5. Procédé selon au moins l'une des revendications précédentes, **caractérisé par le fait que** l'unité d'enregistrement (RM) envoie les signaux de données (DS) sous forme cryptée au détecteur (S) et le détecteur (S) envoie les signaux de données (DS) sous forme cryptée à l'unité d'enregistrement (RM), qu'un constituant de l'unité d'enregistrement (RM) est un module de transfert (TM) qui crypte et décrypte les signaux de données (DS) transmis de l'unité d'enregistrement (RM) au détecteur et du détecteur (S) à l'unité d'enregistrement (RM).

6. Procédé selon au moins l'une des revendications précédentes, **caractérisé par le fait que** l'unité d'enregistrement (RM) comporte une interface pour signaux en temps réel (RTI), qui reçoit les signaux en temps réel (RTS) provenant du détecteur (S), et une interface pour signaux de données (DSI) qui échange les signaux de données (DS) avec le détecteur (S).

7. Procédé selon la revendication 6, **caractérisé par le fait que** l'interface pour signaux en temps réel (RTI) est en liaison transmettant des signaux avec un module d'évaluation des signaux en temps réel (RTSE), que le module d'évaluation des signaux en temps réel (RTSE) analyse les signaux en temps réel (RTS) et génère, à partir des résultats de cette analyse, un deuxième signal de données (DS2) envoyé au module d'évaluation des signaux de données (DSE).

8. Procédé selon la revendication 7, **caractérisé par le fait que** le module d'évaluation des signaux en temps réel (RTSE) échange, au moyen d'une mémoire de communication (KM), des données d'une façon asynchrone avec le module d'évaluation des signaux de données (DSE).

9. Procédé selon au moins l'une des revendications précédentes, **caractérisé par le fait que** le décalage dans le temps (Δt) se situe entre 50 ms et 300 ms.

10. Procédé selon au moins l'une des revendications précédentes, **caractérisé par le fait que** l'unité d'enregistrement (RM) envoie toutes les minutes une première instruction de sollicitation (1.0) au détecteur (S).

11. Procédé selon au moins l'une des revendications précédentes, **caractérisé par le fait que** l'unité d'enregistrement (RM) inscrit, en tant que réponse à la première instruction de sollicitation (1.0) envoyée d'une façon cyclique, un indicateur d'erreur (ou "error flag" en anglais) (FF) dans la mémoire de communication lorsqu'un signal de données (DS) fait défaut.

12. Procédé selon au moins l'une des revendications précédentes, **caractérisé par le fait que** l'unité d'enregistrement (RM) inscrit un indicateur d'erreur (FF) dans la mémoire de communication lorsqu'il apparaît une différence dépassant une certaine limite dans le nombre d'impulsions en temps réel (RTS) lors de la comparaison dans le temps avec le signal de données (DS) et que le signal de données (DS) dépend des enregistrements relatifs au trajet parcouru.

13. Procédé selon au moins l'une des revendications précédentes, **caractérisé par le fait qu**'un indicateur d'erreur (FF) est inscrit et/ou que le trajet parcouru déterminé à partir du signal de données (DS) sert de base à l'enregistrement et/ou qu'un état est enregistré indiquant que la liaison grâce à la ligne de signaux en temps réel (RTL) est en dérangement, lorsque le module d'évaluation des signaux en temps réel (RTSE) ne transmet pas de signal (V) au module d'évaluation des signaux de données (DSE) et le module d'évaluation des signaux en temps réel (RTSE) reconnaît l'état "halte" et que l'interface pour signaux en temps réel (RTI) délivre un nombre d'impulsions en temps réel (RTSN) trop faible par comparaison avec le nombre d'impulsions du signal de données (DSN).

14. Procédé selon au moins l'une des revendications précédentes, **caractérisé par le fait qu**'un indicateur d'erreur (FF) est inscrit et que le trajet parcouru ou la vitesse de conduite déterminés à partir du signal de données (DS) servent de base à l'enregistrement, lorsque le module d'évaluation des signaux en temps réel (RTSE) transmet un signal (V) au module d'évaluation des signaux de données (DSE) et le module d'évaluation des signaux en temps réel (RTSE) reconnaît l'état "rouler" et que l'interface pour signaux en temps réel (RTI) délivre un nombre d'impulsions en temps réel (RTSN) trop faible par comparaison avec le nombre d'impulsions du signal de données (DSN).

15. Procédé selon au moins l'une des revendications précédentes, **caractérisé par le fait qu**'un indicateur d'erreur (FF) est inscrit lorsque le signal de données (DS) fait défaut dans le cadre des instructions cycliques de sollicitation (1.0) et qu'un état est enregistré indiquant que la liaison grâce à la ligne de signaux (DL) est en dérangement.
